# EUROPÄISCHE PATENTANMELDUNG

(11) **EP 0 661 910 A1**
(43) Veröffentlichungstag der Anmeldung: **05.07.1995**
(21) Anmeldenummer: 94810680.2
(22) Anmeldetag: 01.12.1994
(51) Int. Cl.: H05B 7/144

(54) **Verfahren zur Elektrodenregelung eines Gleichstrom-Lichtbogenofens und Elektrodenregeleinrichtung**

(30) Priorität: 29.12.1993 DE 4344854
(71) Anmelder: ABB Management AG, CH-5401 Baden (CH)
(72) Erfinder: Strebel, Eduard, CH-5415 Nussbaumen (CH)

(57) **Zusammenfassung**

Gleichstrom-Lichtbogenöfen (8) weisen einen Stromregler (14) zur Konstanthaltung des Stromes eines Lichtbogens (10) und einen Elektrodenregler (18) zur Beeinflussung der Position einer Elektrode (7) des Lichtbogenofens (8) und somit der Länge eines Lichtbogens (10) auf. Die Regelung der Position der Elektrode (7) erfolgt mittels einer hydraulischen Elektrodenverstelleinrichtung (21), die in Abhängigkeit von der Differenz zwischen einem vorgebbaren Elektrodenregler-Führungsgrößensignal (U_{w}) und einem Istspannungssignal (Uₓ) geregelt wird. Dadurch wird die Lichtbogenlänge (d) so eingeregelt, daß ein Gleichrichter (5) im Mittel mit einer Aussteuerung von z. B. 35°el. arbeitet, unabhängig von der Sekundärspannung eines Ofentransformators (2) und von einem eingestellten Stromsollwert (i_{w}). Um bei Betrieb mit schäumender Schlacke (9) die Wand des Lichtbogenofens (8) besser zu schützen und die eingebrachte Energie besser zu nutzen, wird die Lichtbogenlänge (d) automatisch einer Schlackenhöhe (h) angepaßt. Das Elektrodenregler-Sollwertsignal (U_{w}) wird mittels eines Rechner (16) in Abhängigkeit von einer Lichtbogenfeldstärke (E) und von einem Lautstärkesignal (L') berechnet, welches mittels eines Lautstärkedetektors (25) detektiert wurde.

## Beschreibung

### TECHNISCHES GEBIET

Bei der Erfindung wird ausgegangen von einem Verfahren zur Elektrodenregelung eines Gleichstrom-Lichtbogenofens nach dem Oberbegriff des Patentanspruchs 1 und von einer Elektrodenregeleinrichtung nach dem Oberbegriff des Patentanspruchs 7.

### STAND DER TECHNIK

Mit den Oberbegriffen nimmt die Erfindung auf einen Stand der Technik Bezug, wie er aus der EP-B1-0 068 180 bekannt ist. Dort wird ein Lichtbogenofen mit Gleichstromanspeisung mit 2 Regelkreisen geregelt. Ein Stromregler sorgt für konstanten Strom, entsprechend einem vorgegebenen Stromsollwert. Ein Elektrodenregelkreis beeinflußt die Position der Elektrode und somit die Lichtbogenlänge. Bei einer Verlängerung des Lichtbogens muß der Stromregler die Spannung erhöhen bzw. den Gleichrichter so ansteuern, daß der Strom konstant bleibt. Dies geht jedoch nur, solange Spannungsreserve vorhanden ist. Die Regelung der Elektrode erfolgt mittels eines adaptierbaren Gleichspannungsreglers. Als Gleichspannungsistwert dient die Lichtbogenspannung, die über ein Dämpfungsglied einem Vergleicher bzw. Summierer zugeführt ist. Der Gleichspannungssollwert muß jeweils unter Berücksichtigung der Transformator-Spannungsstufe und des Elektrodenstromes für jeden Arbeitspunkt berechnet werden. Er wird zunächst der Transformatorstufe des Stromrichtertransformators, und damit dem möglichen Spannungshub des Stromrichters entsprechend, mittels eines Begrenzers so begrenzt, daß der Stromrichter stationär maximal knapp unterhalb der Gleichrichtergrenzlage betrieben wird. Der Sollwert wird geglättet dem Summierer zugeführt, um bei Spannungssollwertsprüngen kein Überschwingen des Istwertes zu bekommen, was ein Abreißen des Lichtbogens bewirken könnte.

Bei einem Betrieb des Lichtbogenofens mit schäumender Schlacke kann beim Austritt des Lichtbogens aus der Schlacke wegen der Wärmeabstrahlung der Wirkungsgrad des Lichtbogenofens sinken.

### DARSTELLUNG DER ERFINDUNG

Die Erfindung, wie sie in den Patentansprüchen 1 und 7 definiert ist, löst die Aufgabe, ein Verfahren zur Elektrodenregelung eines Gleichstrom-Lichtbogenofens und eine Elektrodenregeleinrichtung der eingangs genannten Art derart weiterzuentwickeln, daß bei Betrieb mit schäumender Schlacke die Lichtbogenlänge automatisch der Schlackenhöhe angepaßt wird.

Ein Vorteil der Erfindung besteht darin, daß die Wandung des Lichtbogenofens besser geschützt und die eingebrachte Energie besser genutzt wird.

### KURZE BESCHREIBUNG DER ZEICHNUNGEN

Die Erfindung wird nachstehend anhand von Ausführungsbeispielen erläutert. Es zeigen:
- Fig. 1: ein Prinzipschaltbild eines Gleichstrom-Lichtbogenofens mit einem Stromregelkreis und einem Elektrodenregelkreis,
- Fig. 2: ein Flußdiagramm zur Bestimmung eines Elektrodenregler-Sollwertsignals für den Elektrodenregelkreis gemäß Fig. 1,
- Fig. 3: ein Zeitdiagramm der Elektrodenregler-Sollwertspannung und
- Fig. 4: ein Diagramm der Lichtbogenfeldstärke in Abhängigkeit von einer Lichtbogenlänge im Lichtbogenofen.

### WEGE ZUR AUSFÜHRUNG DER ERFINDUNG

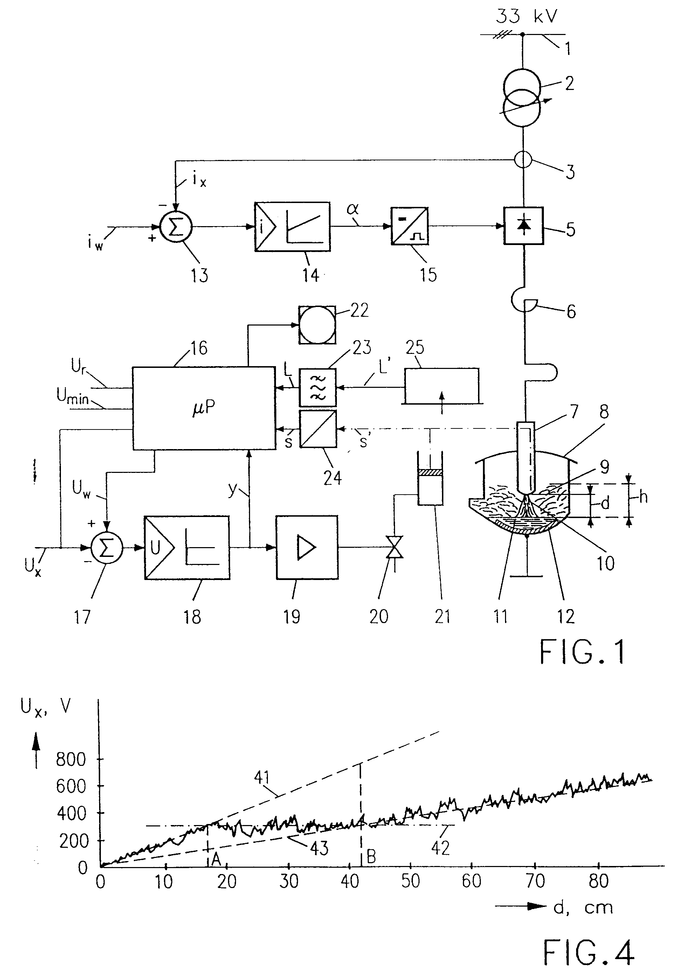

Figur 1 zeigt einen Ofentransformator (2) mit mehreren Schaltstufen, der einerseits an ein Wechselstromnetz (1) mit einer Wechselspannung von 33 kV und andererseits an den Wechselspannungseingang eines Stromrichters bzw. Gleichrichters (5) angeschlossen ist. Die Gleichspannungsseite des Gleichrichters (5) ist über eine Drosselspule (6) mit einer 1. Elektrode bzw. Kathode (7) eines Lichtbogenofens (8) verbunden. Eine im Bodenbereich des Lichtbogenofens (8) angeordnete 2. Elektrode bzw. Anode (12) ist mit dem Pluspol des Gleichrichters (5) verbunden (nicht dargestellt). Zwischen dem unteren Ende der Kathode (7) und einer mit (9) bezeichneten Schlacke sowie mit der Oberfläche einer Schmelze bzw. eines Schmelzbades (11) brennt ein Lichtbogen (10). (d) bezeichnet eine Lichtbogenlänge bzw. einen Elektrodenabstand, d. h. den Abstand zwischen der Kathode (7) und dem Schmelzbad (11), und (h) eine Schlackenhöhe bzw. ein Schlackenniveau über der Schmelze (11).

Mittels eines Stromwandlers (3) in der Wechselstromzuleitung zum Gleichrichter (5) wird ein Strom bzw. Stromistwertsignal (iₓ) detektiert und einem negierenden Eingang eines Vergleichers bzw. Summierers (13) zugeführt. Einem nichtnegierenden Eingang dieses Summierers (13) ist z. B. von einem nicht dargestellten Potentiometer ein vorgebbares Stromsollwertsignal (i_{w}) zugeführt.

Ausgangsseitig ist der Summierer (13) mit einem Stromregler (14) mit Proportional-Integral-Charakteristik verbunden, welcher ausgangsseitig ein Gleichrichter-Stellgrößensignal (α), entsprechend einem Zündwinkel, einem Zündimpulswandler (15) liefert, der ausgangsseitig den Gleichrichter (5) steuert.

Einem negierenden Eingang eines Summierers (17) ist als Elektrodenregler-Istwertsignal ein zur Gleichspannung der Kathode (7) proportionales Istspannungssignal (Uₓ) zugeführt. Einem nichtnegierendem Eingang dieses Summierers (17) ist von einem Rechner (16) als Elektrodenregler-Führungsgrößensignal ein Sollspannungssignal (U_{w}) zugeführt. Ausgangsseitig ist der Summierer (17) mit einem Elektrodenregler (18) mit einer Proportionalcharakteristik verbunden, der ausgangsseitig über einen Ventilverstärker (19) auf ein Ventil (20) einer Elektrodenverstelleinrichtung (21) wirkt, welche einen Stellzylinder und eine nicht dargestellte Stellsäule mit Elektrodentragarm umfaßt. Die Elektrodenverstelleinrichtung (21) ist mechanisch mit der Kathode (7) gekoppelt und ermöglicht deren Höhenverstellung; sie wirkt als ein Verzögerungsglied 1. Ordnung.

Von der Elektrodenverstelleinrichtung (21) wird eine Hub-/Senkposition (s') detektiert und über einen Analog-/Digitalwandler (24) dem Rechner (16) als digitalisierte Hub-/Senkposition (s) zugeführt. Ein Mikrophon oder ein Lautstärkedetektor (25) liefert einem Bandpaßfilter (23) ein ungefiltertes Lautstärkesignal (L'), das proportional zur Lautstärke des Lichtbogenofens (8) ist; ausgangsseitig liefert es dem Rechner (16) ein gefiltertes und digitalisiertes Lautstärkesignal (L). Dem Rechner (16) sind ferner das Istspannungssignal (Uₓ), ein Gleichspannungsminimalwert (Uₘᵢₙ) der Elektrodengleichspannung (U) und ein vorgebbarer Gleichspannungsreferenzwert (Uᵣ) zugeführt. Ausgangsseitig ist der Rechner (16) mit einer Anzeigeeinrichtung oder Meldeeinrichtung (22) verbunden zur Signalisierung, daß das Schlackenniveau (h) im Lichtbogenofen (8) erhöht werden soll.

Die Elektrodenregelung arbeitet etwa 10mal langsamer als die Stromregelung. Die Höhenverstellung der Kathode (7) erfolgt so, daß der Gleichrichter (5) im Mittel mit einer Aussteuerung von z. B. 35°el. arbeitet, unabhängig von der Sekundärspannung des Ofentransformators (2) und vom eingestellten Stromsollwert (i_{w}). Der Einfachheit halber sind Werte und ihnen zugeordnete Signale gleich bezeichnet.

Anstelle des Istspannungssignals (Uₓ) kann dem Summierer (17) als Elektrodenregler-Istwertsignal ein mit der Sekundärspannung des Ofentransformators (2) multipliziertes cos α-Signal zugeführt werden. Es kann dafür auch ein Lichtbogenleistungssignal verwendet werden, nach vorheriger Division durch den Stromistwert (iₓ).

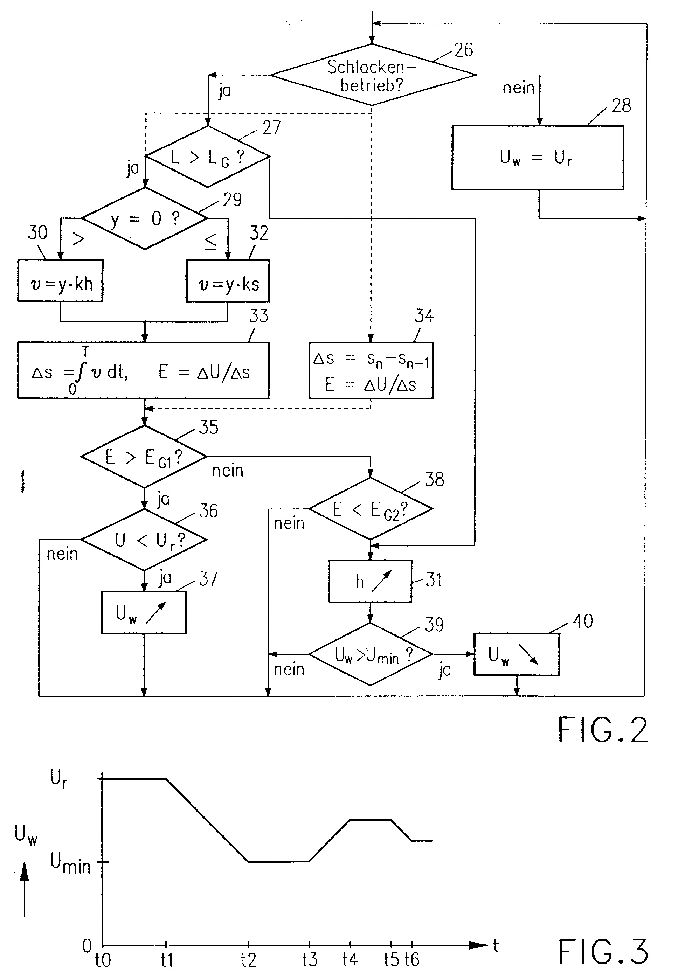

Fig. 2 zeigt in einem Flußdiagramm die wesentlichen Teile der Auswertung der dem Rechner (16) zugeführten Signale. In einer Verzweigung (26) wird abgefragt, ob der Lichtbogenofen (8) im Schlackenbetrieb arbeitet. Wenn nein, wird in einem Operationsblock (28) das Elektrodenregler-Sollwertsignal (U_{w}) auf den Wert des Gleichspannungsreferenzwertes (Uᵣ) gesetzt und zum Eingang der Verzweigung (26) zurückgesprungen. Andernfalls wird in einer Verzweigung (27) abgefragt, ob das Lautstärkesignal (L) größer als ein vorgebbarer Lautstärkegrenzwert (L_{G}) ist. Wenn nein, dann wird zu einem Operationsblock (31) gesprungen, andernfalls zu einer Verzweigung (29). In der Verzweigung (29) wird die Elektrodenreglerstellgröße (y) mit 0 verglichen. Für y > 0 wird in einem Operationsblock (30) eine Hub-/Senkgeschwindigkeit (v) der Kathode (7) bzw. der Elektrodenverstelleinrichtung (21) = y · kh gesetzt. Für y ≦ 0 wird in einem Operationsblock (32) v = y · ks gesetzt. kh und ks sind Konstanten bzw. vorgebbare Korrekturwerte für Heben bzw. Senken, die berücksichtigen, daß bei gleichem Betrag von y die Hebe- und Senkgeschwindigkeiten der Kathode (7) unterschiedlich sein können. Mit diesen v-Werten wird in einem Operationsblock (33) durch Integration über eine vorgebbare Zyklusdauer bzw. Integrationsdauer (T) eine Wegänderung (Δs) der Kathode (7) berechnet und daraus eine Lichtbogenfeldstärke (E) gemäß E = ΔU/ s. Dabei bedeutet ΔU die Änderung der Elektroden-Istspannung (Uₓ) während der Integrationsdauer (T), gemäß ΔU = Uₓₙ - Uₓₙ₋₁, wobei Uₓₙ den Spannungswert am Ende und Uₓₙ₋₁ den Spannungswert am Anfang der Integrationsdauer (T) bezeichnen.

Statt aus der Elektrodenreglerstellgröße (y) kann die Wegänderung (Δs), vgl. den gestrichelt zwischen den Verzweigungen (27) und (35) angeschlossenen Operationsblock (34), aus der Hub-/Senkposition (s) vom Ausgang des Analog-/Digitalwandlers (24), vgl. Fig. 1, abgeleitet werden, gemäß Δs = sₙ - sₙ₋₁, wobei Sₙ den Positionswert am Ende und sₙ₋₁ den Positionswert am Anfang der Integrationsdauer (T) bezeichnen.

Nach der Berechnung der Lichtbogenfeldstärke (E) wird in einer Verzweigung (35) abgefragt, ob diese Lichtbogenfeldstärke (E) größer als ein vorgebbarer 1. Feldstärkegrenzwert (E_{G1}) von vorzugsweise 16 V/cm ist. Wenn nein, wird zu einer Verzweigung (38) gesprungen, andernfalls wird in einer Verzweigung (36) abgefragt, ob der Elektrodenregler-Sollwert (U_{w}) kleiner als der Gleichspannungsreferenzwert (Uᵣ) ist. Wenn nein, wird zum Eingang der Verzweigung (26) gesprungen. Andernfalls wird in einem Operationsblock (37) der Elektrodenregler-Sollwert (U_{w}) vergößert und ebenfalls zum Eingang der Verzweigung (26) gesprungen.

In der Verzweigung (38) wird abgefragt, ob diese Lichtbogenfeldstärke (E) kleiner als ein vorgebbarer 2. Feldstärkegrenzwert (E_{G2}) von vorzugsweise 8 V/cm ist. Wenn nein, wird zum Eingang der Verzweigung (26) gesprungen, andernfalls wird in einem Operationsblock (31) über die Meldeeinrichtung (22), vgl. Fig. 1, eine Meldung "Schlackenniveau erhöhen" ausgegeben und in einer Verzweigung (39) abgefragt, ob der Elektrodenregler-Sollwert (U_{w}) größer als der Gleichspannungsminimalwert (Uₘᵢₙ) ist. Wenn nein, wird zum Eingang der Verzweigung (26) gesprungen, andernfalls wird in einem Operationsblock (40) der Elektrodenregler-Sollwert (U_{w}) verkleinert und ebenfalls zum Eingang der Verzweigung (26) gesprungen.

Die Meldung "Schlackenniveau erhöhen" kann direkt zur Steuerung der Schlackenhöhe eingesetzt werden. Dabei steuert dieses Erhöhungssignal einen nicht dargestellten Integrator so, daß bei zu tiefem Schlackenniveau der Integrator hochläuft und einer ebenfalls nicht dargestellten Schlackenhöhensteuerung einen größeren Sollwert vorgibt. Die Zeitkonstante dieses Integrators wird dem Zeitverhalten der Schaumschlacke (9) angepaßt. Der Rechner (16) sorgt dafür, daß die Elektrodenregelung (18) die Elektrode (7) entsprechend der Schlackenhöhe nachstellt, bis die gewünschte Lichtbogenlänge erreicht ist. Nun verschwindet das Erhöhungssignal, und der Integrator läuft langsam zurück. Die Schlackenhöhe wird auf diese Art immer auf optimaler Höhe gehalten, was einer optimalen Energieeinbringung entspricht.

Fig. 3 veranschaulicht beispielhaft die Änderung des Elektrodenregler-Sollwertes (U_{w}) in Abhängigkeit von der Zeit (t). Zu einem Zeitpunkt (t0) ist der Elektrodenregler-Sollwert (U_{w}) gleich dem Gleichspannungsreferenzwert (Uᵣ). Zwischen Zeitpunkten (t1) und (t3) ist das Lautstärkesignal (L) größer als der Lautstärkegrenzwert (L_{G}). Zwischen den Zeitpunkten (t1) und (t2) ist gleichzeitig das Elektrodenregler-Sollwertsignal (U_{w}) größer als der Gleichspannungsminimalwert (Uₘᵢₙ), so daß in diesem Zeitintervall der Elektrodenregler-Sollwert (U_{w}) abnimmt. Da zum Zeitpunkt (t2) der Gleichspannungsminimalwert (Uₘᵢₙ) erreicht wird, bleibt von da an bis zum Zeitpunkt (t3) der Elektrodenregler-Sollwert (U_{w}) unverändert. Zwischen Zeitpunkten (t3) und (t4) ist die Lichtbogenfeldstärke (E) größer als der 1. Feldstärkegrenzwert (E_{G1}) und gleichzeitig der Elektrodenregler-Sollwert (U_{w}) kleiner als der Gleichspannungsreferenzwert (Uᵣ), so daß der Elektrodenregler-Sollwert (U_{w}) ansteigt und danach bis zu einem Zeitpunkt (t5) konstant bleibt. Zwischen Zeitpunkten (t5) und (t6) ist die Lichtbogenfeldstärke (E) kleiner als der 2. Feldstärkegrenzwert (E_{G2}) und gleichzeitig der Elektrodenregler-Sollwert (U_{w}) größer als der Gleichspannungsminimalwert (Uₘᵢₙ), so daß in diesem Zeitintervall der Elektrodenregler-Sollwert (U_{w}) wieder abnimmt.

Fig. 4 zeigt den Verlauf der Elektrodenspannung (Uₓ) in Volt in Abhängigkeit von dem Elektrodenabstand (d) in cm, wobei der Strom (iₓ) auf einem Wert von 60 kA gehalten wurde. Aus dem Diagramm ist ersichtlich, daß die durch Geraden (41 - 43) angedeutete Lichtbogenfeldstärke (E) nicht konstant ist. Bei kurzem Lichtbogen (10) bis etwa 17 cm, entsprechend einem Arbeitspunkt (A), beträgt die Lichtbogenfeldstärke (E) etwa 18 V/cm, vgl. die Gerade (41), und bleibt dann über einen Verstellweg von 25 cm, d. h. bis zu einem Arbeitspunkt (B), etwa konstant, vgl. die Gerade (42). Bei einer weiteren Verstellung kann man beobachten, daß die Lichtbogenfeldstärke (E) nur noch ca. 7 V/cm beträgt, vgl. die Gerade (43).

Eine Analyse ergibt, daß ein mit Schlacke (9) überdeckter Lichtbogen (10) einen höheren Widerstandswert hat als ein freibrennender. Dies entspricht einer größeren Lichtbogenfeldstärke (E).

Bei der in Fig. 4 wiedergegebenen Messung wurde mit Schaumschlacke von etwa 17 cm Höhe gearbeitet. Das entspricht der Höhe (h), die man im Arbeitspunkt (A) erreicht. Ab diesem Arbeitspunkt (A), ab dem der Lichtbogen (10) frei zu brennen beginnt, kann man annehmen, daß die Strahlwirkung des Stromes (iₓ) die Schlacke (9) zunehmend verdrängt. Die Lichtbogenfeldstärke (E) nimmt mit zunehmendem Elektrodenabstand (d) ab. Bei einer Höhe von 42 cm im Arbeitspunkt (B) erreicht der Lichtbogen (10) den Zustand, den er ohne Schlacke (9) haben würde. Der Lichtbogen (10) hat beim Arbeitspunkt (A) eine Leistung von 18 MW (300 V · 60 kA). Die gleiche Leistung hat er aber auch im Arbeitspunkt (B) bei 2,5facher Lichtbogenlänge. In diesem Zustand brennt mehr als 50 % des Lichtbogens (10) über der Schlacke (9). Dadurch wird der Wirkungsgrad des Lichtbogenofens (8) wegen der Wärmeabstrahlung wesentlich schlechter.

Ziel der Erfindung ist es, die Lichtbogenfeldstärke (E) zu erfassen und damit die Lichtbogenlänge (d) bei Betrieb mit schäumender Schlacke (9) automatisch der Schlackenhöhe (h) anzupassen, um die Wand des Lichtbogenofens (8) besser zu schützen und die eingebrachte Energie besser zu nutzen. Dem Elektrodenregler (18) wird das Elektrodenregler-Sollwertsignal (U_{w}) von dem Rechner (16) vorgegeben. Das Istspannungssignal (Uₓ) entspricht der Ausgangsspannung des Gleichrichters (5). Über den Ventilverstärker (19) und die Elektrodenverstelleinrichtung (21) wird die Kathode (7) mit einer der Elektrodenreglerstellgröße (y) proportionalen Hub-/Senkgeschwindigkeit (v) solange verstellt, bis die Lichtbogenspannung (Uₓ) dem vom Rechner (16) vorgegebenen Wert (U_{w}) entspricht. Gleichzeitig wird vom Stromregler (14) der Gleichrichter (5) so ausgesteuert, daß der Stromistwert (iₓ) konstant bleibt.

Da der Lärmunterschied beim Betrieb innerhalb der Schlacke (9) und außerhalb sehr groß ist, kann mit dem Geräuschaufnehmer bzw. Lautstärkedetektor (25) sehr klar definiert werden, in welchem Betriebszustand der Lichtbogenofen (8) gefahren wird. Der Lichtbogen (10) in der schäumenden Schlacke (9) ist viel ruhiger als ein frei brennender Lichtbogen. Dementsprechend treten auch große Unterschiede bei den Strom- und Spannungsschwankungen auf.

Zunehmender Lärm kann dazu benutzt werden, das Erhöhen des Elektrodenregler-Sollwertsignals (U_{w}), vgl. den Operationsblock (37) in Fig. 2, zu stoppen. Großes Geräusch veranlaßt eine Erniedrigung des Elektrodenregler-Sollwertsignals (U_{w}), siehe den Operationsblock (40) in Fig. 2.

Das dem Elektrodenregler (18) vorgegebene Elektrodenregler-Sollwertsignal (U_{w}) wird auf die beiden Grenzwerte:
Gleichspannungsminimalwert (Uₘᵢₙ) und Gleichspannungsreferenzwert (Uᵣ) überwacht, entsprechend einem minimal bzw. maximal zulässigen Elektrodenabstand (d).

Solange sich der vorgegebene Arbeitspunkt nicht innerhalb der Schlacke (9) befindet, wird eine Meldung, vgl. Operationsblock (31) in Fig. 2, als Aufforderung zur Schlackenerhöhung abgegeben. Der Lichtbogenofen (8) wird durch die Elektrodenregelung im Nahbereich des Arbeitspunktes (A), vgl. Fig. 4, betrieben. Man sieht, daß im unteren Bereich bis zum Arbeitspunkt (A) die Strom- und Spannungsschwankungen kleiner sind. Der Stromistwert (iₓ), die Lichtbogenspannung (Uₓ) oder eine als Quotient aus Uₓ/iₓ berechnete Impedanz (Z) können auf Schwingungen analysiert werden. Das Ergebnis dieser Schwingungsanalyse kann mit einem vorgebbaren Schwingungsgrenzwert verglichen werden, wobei Grenzwertüberschreitungen als Indikation für "Lichtbogen (10) zu lang" ausgewertet werden, analog zu der Lautstärkeauswertung.

### BEZEICHNUNGSLISTE

- 1: Wechselstromnetz
- 2: Ofentransformator mit mehreren Schaltstufen
- 3: Stromwandler
- 5: Gleichrichter
- 6: Drosselspule
- 7: Kathode, Elektrode
- 8: Lichtbogenofen
- 9: Schlacke
- 10: Lichtbogen
- 11: Schmelze, Schmelzbad
- 12: Anode, 2. Elektrode
- 13, 17: Summierer
- 14: Stromregler
- 15: Zündimpulswandler
- 16: Rechner, Mikroprozessor
- 18: Elektrodenregler
- 19: Ventilverstärker
- 20: Ventil
- 21: Elektrodenverstelleinrichtung
- 22: Anzeigeeinrichtung, Meldeeinrichtung
- 23: Bandpaßfilter
- 24: Analog-/Digitalwandler
- 25: Mikrophon, Lautstärkedetektor
- 26, 27, 29, 35, 36, 38, 39: Verzweigungen
- 28, 30 - 34, 37, 40: Operationsblöcke
- 41 - 43: Geraden
- A: Arbeitspunkt, Schnittpunkt von 41 und 42
- B: Schnittpunkt von 42 und 43
- d: Abstand zwischen 7 und 11, Elektrodenabstand, Lichtbogenlänge
- E: elektrische Lichtbogenfeldstärke
- E_{G1}, E_{G2}: 1. bzw. 2. Feldstärkegrenzwerte von E
- h: Schlackenhöhe, Schlackenniveau
- iₓ: Stromistwertsignal, Strom
- i_{w}: Stromsollwertsignal, Stromsollwert
- kh, ks: Konstanten
- L: gefiltertes Lautstärkesignal
- L': ungefiltertes Lautstärkesignal
- L_{G}: Grenzwert von L, Lautstärkegrenzwert
- s: digitale Hub-/Senkposition von 7
- s': detektierte Hub-/Senkposition von 7
- sₙ₋₁, sₙ: aufeinanderfolgende Hub-/Senkpositionen von 7
- Δs: Wegänderung während T
- t: Zeit
- t0 - t6: Zeitpunkte
- T: Zyklusdauer, Integrationsdauer
- U: Elektrodengleichspannung
- Uₘᵢₙ: Gleichspannungsminimalwert von U
- Uᵣ: Gleichspannungsreferenzwert von U
- U_{w}: Sollwert von U, Elektrodenregler-Sollwertsignal
- Uₓ: Istwert von U, Elektrodenregler-Istwertsignal, Istspannungssignal, Lichtbogenspannung
- ΔU: Spannungsänderung während T
- v: Hub-/Senkgeschwindigkeit
- y: Elektrodenreglerstellgröße
- α: Gleichrichter-Stellgrößensignal, Zündwinkel

## Patentansprüche

1. Verfahren zur Elektrodenregelung eines Gleichstrom-Lichtbogenofens (8),
a) dessen Lichtbogenstromstärke mittels eines Regelsignals bzw. eines Gleichrichter-Stellgrößensignals (α) auf einen vorgebbaren Stromsollwert (i_{w}) geregelt wird und
b) dessen Elektrodenabstand (d), d. h. der Abstand zwischen mindestens einer verstellbaren Elektrode (7) und einem Schmelzbad (11) des Lichtbogenofens (8), in Abhängigkeit von einer Differenz zwischen einem vorgebbaren Elektrodenregler-Sollwertsignal (U_{w}) und einem Elektrodenregler-Istwertsignal (Uₓ) geregelt wird,
dadurch gekennzeichnet,
c) daß das Elektrodenregler-Sollwertsignal (U_{w}) in Abhängigkeit von einer Schlackenhöhe (h) im Lichtbogenofen (8) gebildet wird.

2. Verfahren nach Anspruch 1, dadurch gekennzeichnet, daß das Elektrodenregler-Sollwertsignal (U_{w}) in Abhängigkeit davon gebildet wird, daß ein beim Schmelzbetrieb detektiertes Lautstärkesignal (L') oder ein dazu proportionales Signal einen vorgebbaren Grenzwert (L_{G}) überschreitet.

3. Verfahren nach Anspruch 1 oder 2, dadurch gekennzeichnet, daß das Elektrodenregler-Sollwertsignal (U_{w}) vergrößert wird,
a) wenn eine elektrische Lichtbogenfeldstärke (E) eines Lichtbogens (10) des Lichtbogenofens (8) größer als ein vorgebbarer 1. Feldstärkegrenzwert (E_{G}₁) ist und
b) wenn gleichzeitig dieses Elektrodenregler-Sollwertsignal (U_{w}) kleiner als ein vorgebbarer Gleichspannungsreferenzwert (Uᵣ) einer Elektrodengleichspannung (U) des Lichtbogenofens (8) ist.

4. Verfahren nach einem der vorhergehenden Ansprüche, dadurch gekennzeichnet, daß das Elektrodenregler-Sollwertsignal (U_{w}) verkleinert wird,
a) wenn eine elektrische Lichtbogenfeldstärke (E) eines Lichtbogens (10) des Lichtbogenofens (8) kleiner als ein vorgebbarer 2. Feldstärkegrenzwert (E_{G2}) ist und
b) wenn gleichzeitig dieses Elektrodenregler-Sollwertsignal (U_{w}) größer als ein vorgebbarer Gleichspannungsminimalwert (Uₘᵢₙ) einer Elektrodengleichspannung (U) des Lichtbogenofens (8) ist.

5. Verfahren nach Anspruch 3 oder 4, dadurch gekennzeichnet, daß die Lichtbogenfeldstärke (E) in Abhängigkeit von einer Elektrodenreglerstellgröße (y) des Elektrodenreglers (18) berechnet wird.

6. Verfahren nach Anspruch 5, dadurch gekennzeichnet, dadurch gekennzeichnet,
a) daß die Lichtbogenfeldstärke (E) gemäß E = ΔU/Δs, berechnet wird,
b) daß Δs durch Integration einer Hub-/Senkgeschwindigkeit (v) der Kathode (7) während einer vorgebbaren Integrationsdauer (T) gebildet wird und
c) daß in Abhängigkeit vom Vorzeichen der Elektrodenreglerstellgröße (y) die Hub-/Senkgeschwindigkeit (v) unterschiedlich bewertet wird, wobei ΔU eine Spannungsänderung der Elektrodengleichspannung (U) während der Integrationsdauer (T) und Δs die Änderung eines Elektrodenabstandes (d) der Kathode (7) von einer Schmelze (11) während dieser Integrationsdauer (T) bedeuten.

7. Elektrodenregeleinrichtung für einen Gleichstrom- Lichtbogenofen (8) zur Durchführung des Verfahrens nach einem der vorhergehenden Ansprüche,
a) der mindestens eine verstellbare Elektrode (7) aufweist, die mit einem Stromrichter (5) in Wirkverbindung steht,
b) welcher von einem Stromregler (14) geregelt wird, und
c) mit einer Elektrodenverstelleinrichtung (21) zur Einstellung eines Elektrodenabstandes (d) zwischen der mindestens einen Elektrode (7) und einem Schmelzbad (11) des Lichtbogenofens (8),
d) welche von einem Elektrodenregler (18) geregelt wird,
dadurch gekennzeichnet,
e) daß ein Lautstärkedetektor (25) zur Aufnahme der Lautstärke des Lichtbogenofens (8) ausgangsseitig über eine Auswerteinrichtung oder einen Rechner (16) mit dem Elektrodenregler (18) in Wirkverbindung steht, derart, daß ein Elektrodenregler-Sollwertsignal (U_{w}) in Abhängigkeit davon verändert wird, daß ein Lautstärkesignal (L) von diesem Lautstärkedetektor (25) einen vorgebbaren Lautstärkegrenzwert (L_{G}) überschreitet.
